# EUROPEAN PATENT APPLICATION

(11) **EP 4 579 969 A1**
(43) Date of publication of application: **02.07.2025**
(21) Application number: 24220382.6
(22) Date of filing: 16.12.2024
(51) Int. Cl.: H02G 5/00, H01R 11/01, H01R 11/09, B60L 1/00, H01M 4/00, H01R 4/34

(54) **A BUSBAR ELEMENT**

(30) Priority: 26.12.2023 FR 2315324
(71) Applicant: VALEO EMBRAYAGES, 80009 Amiens (FR)
(72) Inventor: VERHOOG, Roel, 80009 AMIENS (FR)
(74) Representative: Valeo Powertrain Systems

(57) **Abstract**

The present subject matter relates to a bus bar element (10) for use in automobile applications and in charging stations. The bus bar element (10) includes a first terminal body (1) that extends along a first axis (X) has a first surface (5) and a second surface (4) defining a thickness along a third axis (Z). The first terminal body (1) is configured to electrically couple with an electrical interface. A main body (3) extends from the first terminal body (1). The said first terminal boy (1) has an opening (8) that is configured to receive a fastener wherein a first thickness (T1) of the opening (8) of the first terminal body (1) extending in the first axis (X) towards the main body (3) is greater than a second thickness (T2) of at least part of the first terminal body (1) extending towards an axial end.

## Description

The present subject matter relates to a bus bar element, a bus bar system particularly for electrically coupling plurality of electrical conductive members of an electrical device preferably for automobile applications and in charging stations.

In recent years, an automobile uses power from more than one sources, which are commonly known as hybrid vehicles. For example, a kind of hybrid vehicle uses an engine and an electric motor for propulsion which is known as Hybrid Electric Vehicle (HEV). In a non-limiting example, Electric motor alone propels the vehicle and a battery powers the electric motor. This kind of vehicles are known as Battery operated Electric Vehicle (BEV). Automobiles usually includes plurality of electrical components like cell, battery, inverter, electric power converters, battery module, on board chargers, etc. In general, in an automobile for its working, it is essential to electrically couple plurality of electrical and electronic components with each other and with other components. In case of a battery module that comprises a plurality of cells, it is mandatory to connect the individual cells using an interconnect or a terminal connector or a cell connector or a bus bar element to get the required power output for working of the automobile.

In a known manner, the volume of such bus bar is not considered with respect to the current density. Therefore, there is a need to solve the technical problem associated with the typical bus bar element explained above.

It is accordingly an object of the present arrangement to provide a bus bar element, to overcome the above mentioned and other disadvantages of the known arrangements.

The present arrangement relates to a bus bar element for an electrical connection comprising: a first terminal body extending along a first axis having a first surface and a second surface defining a thickness configured to electrically couple with an electrical interface; a main body extending from the first terminal body; the said first terminal body having an opening configured to receive a fastener; wherein a first thickness of the opening of the first terminal body extending in the first axis towards the main body is greater than a second thickness of at least part of the first terminal body extending towards an axial end. Therefore, by virtue of the shape, the bus bar element is improved with different volumes with respect to different current densities throughout the bus bar element and the bus bar element with improved material usage results in material reduction.

According to an aspect of the arrangement, a first boundary of the opening in the first axis towards the main body has the first thickness in a third axis and a second boundary of the opening in the first axis towards the axial end has the second thickness along the third axis. By virtue of different thicknesses on either side of the opening, the volume of the bus bar element is reduced thus, CO₂ and production cost associated is reduced.

According to an aspect of the arrangement, the first terminal body is sloped downward away from the main body and along the first axis. Accordingly the material is avoided to have a sloped portion of the first terminal body, as current density is low in that area thus the bus bar element is improved with different volume with respect to different current density.

According to another aspect of the arrangement, the bus bar element is made of sheet material and defining a width along a second axis and a length along the first axis, the said first axis and the second axis are perpendicular to each other. Accordingly, the material removed from the sheet material can be recycled.

According to yet another aspect of the arrangement, a first width of the main body is greater than a cross sectional width of the first terminal body at least along a plane normal to the first axis.

According to an example of the arrangement, the first terminal body having a curved shape with a third width.

According to an example of the arrangement, the first terminal body having a circular axial end with a first diameter.

According to an example of the arrangement, the opening is a circular profile with a second diameter.

According to an example of the arrangement, the first width of the main body extending in the second axis is at least greater than the first diameter.

According to an example of the arrangement, the first terminal body having the opening extends along the first axis and to the axial end.

According to yet another aspect of the arrangement, the bus bar element comprises a second terminal body extending from the main body. One advantage of using the first terminal body and the second terminal body is to interconnect two terminals for an electrical connection.

According to yet another aspect, the present subject matter relates to a bus bar connector assembly comprising a first bus bar element in accordance with the present arrangement and a second bus bar element in accordance with the present arrangement, wherein the first surface of the first terminal body of the first bus bar element is configured to abut against a first surface of a first terminal body of the second bus bar element for electrical coupling. By virtue of which clearance required to accommodate overlapping of bus bar elements inside a casing is reduced, since overlapping of bus bar elements lies well within the thickness of the main body.

According to yet another aspect, the present subject matter relates to a bus bar connector assembly wherein a central axis of the opening of the first terminal body of the first bus bar element coincide with a central axis of an opening of the first terminal body of the second bus bar element to receive the fastener for electrical coupling. By virtue of which a progressive current transfer takes place.

Accordingly the bus bar element is thereby held in place and provides mechanical stability, specifically in applications where vibrations or movement is a concern.

The current density of a bus bar element is more in the first terminal body and / or the second terminal body, at the opening adjacent to the main body. Accordingly the volume of the bus bar element is improved by having more volume in high current density regions that is in the first terminal body and / or the second terminal body, at the opening adjacent to the main body and by avoiding volume in low current density regions that is in the first terminal body and / or the second terminal body, at the opening towards the axial end along the first axis X.

The features, aspects and advantages of the present arrangement can be better understood with reference to the following description and figures. The components in the figures are not necessarily to scale, emphasis instead being placed upon illustrating the principles of the arrangement. Moreover, in the figures, like reference numerals designate corresponding parts. In the drawings:
[Figure 1A] illustrates a side view of an embodiment of a bus bar element configured in accordance with the present subject matter;
[Figure 1B] illustrates a side view of another embodiment of a bus bar element configured in accordance with the present subject matter;
[Figure 2] illustrates top view of an embodiment of a bus bar element configured in accordance with the present subject matter;
[Figure 3] illustrates a side view of a bus bar connector assembly configured in accordance with an arrangement of the present subject matter;
[Figure 4], [Figure 5], [Figure 6], [Figure 7], [Figure 8], [Figure 9], and [Figure 10] illustrate top view of various embodiments of a bus bar element configured in accordance with the present subject matter;

The figures are not necessarily to scale, and the size of some parts may be exaggerated to more clearly illustrate the example shown. Moreover, the drawings provide examples and/or examples consistent with the description; however, the description is not limited to the examples and/or examples provided in the drawings.

In the description that follows, reference is made to accompanying drawings, which form part thereof, and in which is shown by way of illustration specific implementations in which the invention may be practiced. These implementations are described in sufficient detail to enable that skilling in the art to practice the invention, and it is to be understood that the implementations may be combined, or that other implementations may be utilized, and that structural and logical changes may be made without departing from the scope of the present invention. The following detailed description is, therefore, not to be taken in a limiting sense, and the scope of the present invention is defined by the appended claims and their equivalents.

The elements which are identical, similar or analogous retain the same reference from one figure to another. The ordinal numbers are used to differentiate features. They do not define a position of a feature. As a consequence, for example, a third feature of a product does not mean that the product has a first and/or a second feature.

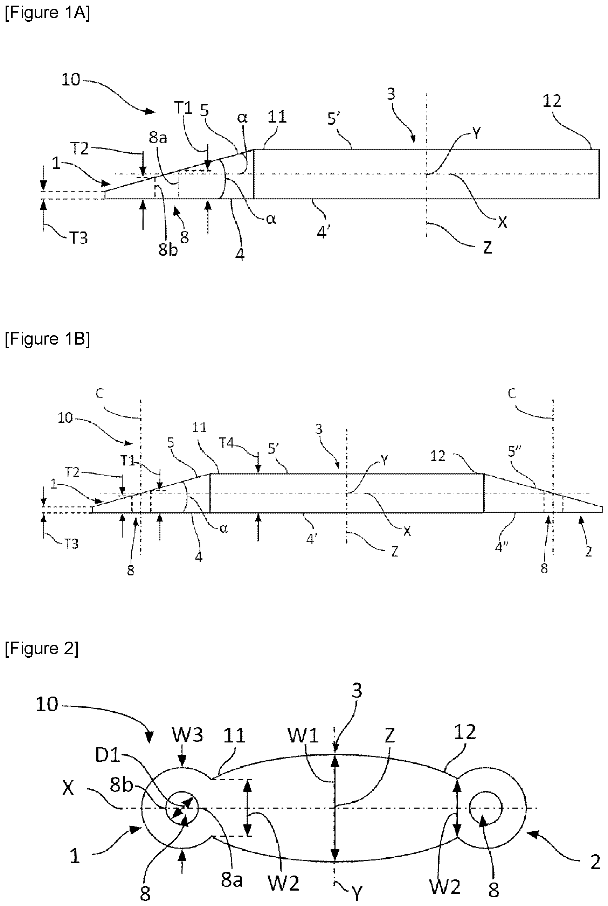

[Figure 1A] illustrates a side view of an embodiment of a bus bar element 10 configured in accordance with the present subject matter. [Figure. 1B] illustrates a side view of another embodiment of a bus bar element configured in accordance with the present subject matter. The description herein pertains to [Figure 1A] and [Figure1B] in tandem for the sake of brevity.

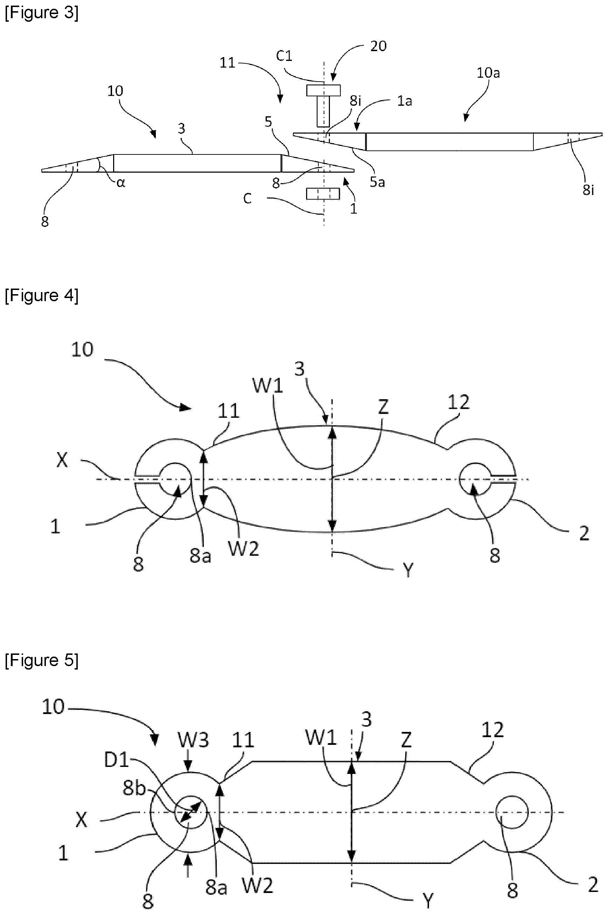

The bus bar element 10 for an electrical connection that includes a first terminal body 1 extending along a first axis X having a first surface 5 and a second surface 4 defining a thickness along a third axis Z. In other word the thickness of the first terminal body 1 is defined by the distance between the first surface 5 of the first terminal body 1 and the second surface 4 of the first terminal body 1. The thickness of the first terminal body 1 is not uniform. In other words the distance between the first surface 5 of the first terminal body 1 and the second surface 4 of the first terminal body 1 is not uniform. The first terminal body 1 is configured to electrically couple with an electrical interface. A main body 3 is extending from the first terminal body 1. The first terminal body 1 is having an opening 8. The said first terminal body 1 having the opening 8 is configured to receive a fastener 20 (shown in [Figure 3]) wherein a first thickness T1 of the opening 8 of the first terminal body 1 extending in the first axis X towards the main body 3 is greater than a second thickness T2 of at least part of the first terminal body 1 extending towards an axial end.

[Figure 1A] illustrates an example where the first terminal body 1 extends from the first portion 11 of the main body 3. However it is alternatively possible to have a second terminal body 2 extending from the second portion 12 of the main body 3. [Figure 1B] illustrates one such example, in which the bus bar element 10 comprises a second terminal body 2 extending from the second portion 12 of main body 3. Accordingly, both the first terminal body 1 and the second terminal body 2 facilitate mounting of the bus bar element 10 to an electrical interface, and both the first terminal body 1 and the second terminal body 2 operate to distribute electric energy to establish an electrical connection.

In an example as illustrated in [Figure 1B], the main body 3 is disposed in between the first terminal body 1 and the second terminal body 2. The said main body 3 having a first surface referred as 5' and a second surface referred as 4'. The distance between the first surface 5' of the main body 3 and the second surface 4' of the main body 3 defines a thickness T4 of the main body 3. The thickness T4 of the main body 3 is for example uniform and ranging between 1mm and 10mm. Preferably the thickness T4 is between 2mm and 5mm. In one aspect, the thickness T4 of the main body 3 is greater than the first thickness T1 of the opening 8 of the first terminal body 1.

According to [ Figure 1A] and [Figure 1B], the first terminal body 1 of the bus bar element 10 having a first surface 5 and a second surface 4 defining a thickness along a third axis Z. The first terminal body 1 is sloped downward away from the main body 3 along the first axis X. The thickness of the first terminal body 1 is not uniform. In other words, the distance between the first surface 5 of the first terminal body 1 and the second surface 4 of the first terminal body 1 is not uniform. The first surface 5 of the first terminal body 1 and the second surface 4 of the first terminal body 1 are sloped or bevelled at an angle α to each other. In an aspect the angle α is between the first surface 5 of the first terminal body 1 and the first axis X. The second surface 4 of the first terminal body 1 is being parallel to the first axis X and the first surface 5 of the first terminal body 1 is being sloped towards the axial end along the first axis X at an angle α to the first axis X. Likewise, the second terminal body 2 having a first surface referred as 5" and a second surface referred as 4" defining a thickness along the Z axis. The said first surface 5" of the second terminal body 2 and the second surface 4" of the second terminal body 2 are sloped at an angle α as described above. Preferably the angle α takes the value between 3° and 15°. The thickness T3 of the first terminal body 1 at the axial end along the first axis X away from the main body 3 ranges between 0.5mm and 5mm.

In yet another embodiment, the second terminal body 2 extends from the main body 3 according to the above description in such a way that the main body is disposed between the first terminal body 1 and the second terminal body 2.

In one embodiment, the first thickness T1 of the bus bar element 10 from the first terminal body 1 towards the main body 3 is higher than the second thickness T2 of the first terminal body 1 towards the free end.

In an exemplary embodiment as shown in [Figure 1A] and [Figure 1B], the first terminal body 1 has the opening 8. The opening 8 has a central axis C. The opening 8 extends axially in between the first surface 5 of the first terminal body 1 and the second surface 4 of the first terminal body 1. In other words the opening 8 extends along the central axis C as a through opening 8 in the first terminal body 1.

In yet another embodiment, the second terminal body 2 has an opening 8 according to the above description.

In an instance the opening 8 is a circular profile complimentary to receive a fastener 20 as illustrated in [Figure 1A] and [Figure 1B]. The said opening 8 of the first terminal body 1 having a first boundary 8a in the first axis X towards the main body 3 has the first thickness T1 in a third axis Z and the second boundary 8b of the opening 8 is in the first axis X towards the axial end of the first terminal body 1 has the second thickness T2 along the third axis Z.

In one embodiment the first thickness T1 of the boundary 8a of the opening 8 in the first axis X towards the main body 3 is greater than the second thickness T2 of the second boundary 8b of the opening 8 in the first axis X towards the axial end of the first terminal body 1. The thickness of the opening 8 implies the distance or depth through which the opening 8 extends in between the first surface 5 of the first terminal body 1 and the second surface 4 of the first terminal body 1. In other words the first thickness T1 of the opening 8 is the distance or depth of the opening 8 with the first boundary 8a in the first axis X towards the main body 3. The second thickness T2 of the opening 8 is the distance or depth of the opening 8 with the second boundary 8b in the first axis X towards the axial end of the first terminal body 1.

In one embodiments, the opening 8 is of elliptical or elongated rounded profile. In one embodiment (not shown), the opening 8 is a circular profile and has internal threads. A threaded fastener intended to cooperate with the internal threads of the opening 8 for the fastening.

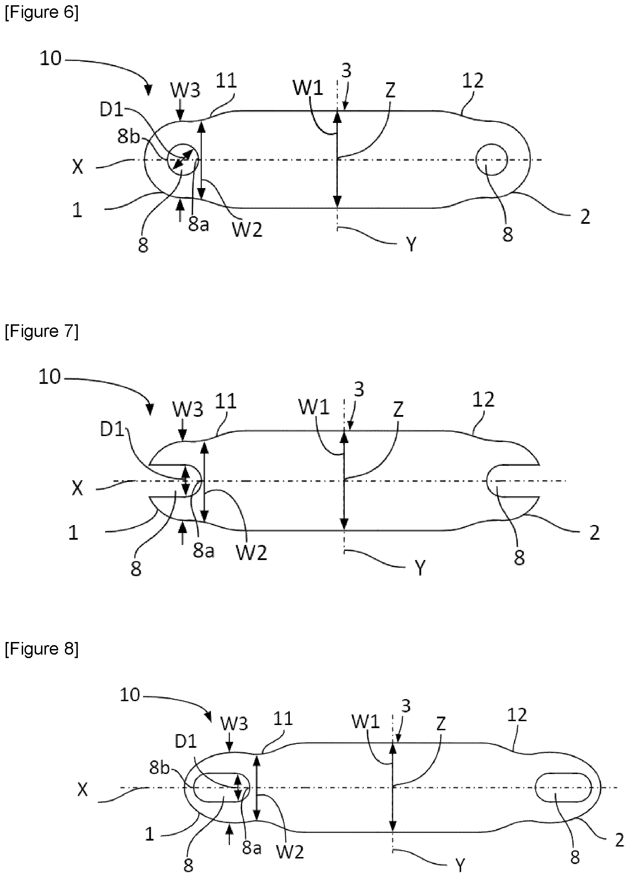

In an exemplary embodiment as illustrated in [Figure 8], the opening 8 extends along the first axis X towards the main body 3 to meet the first boundary 8a and towards the axial end of the first terminal body 1 as an elongated opening to meet the second boundary 8b.

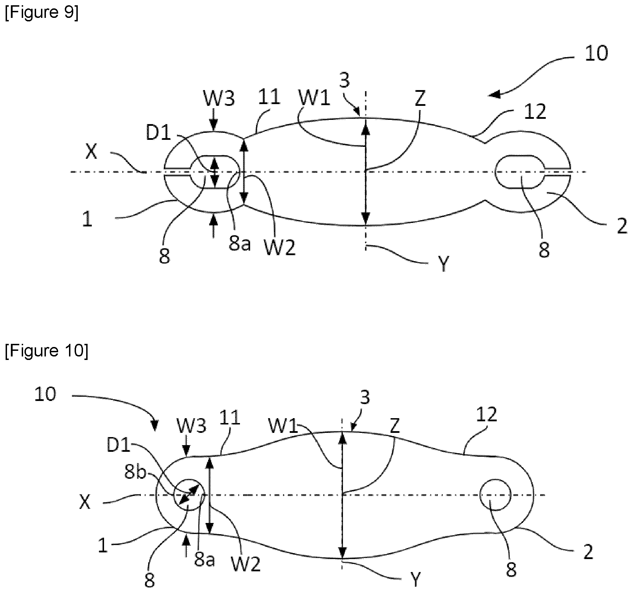

In one embodiment the opening 8 extends along the first axis X towards the main body 3 to meet first boundary 8a and towards the axial end of the first terminal body 1 is open without the second boundary 8b, in other words there is no second boundary 8b as illustrated in [Figure 4], [Figure 7] and [Figure 9].

In an instance the second boundary 8b is introduced (not shown) in the embodiments as shown in [Figure 4], [Figure 7] and [Figure 9] by welding to accept the torque of the fastener 20 tightening.

In one embodiment the fastener 20 is a bolt and nut with washer (not shown) as illustrated in [Figure 3]. The washer (not shown) is used to give a better grasp for holding the flat surface of the nut and the flange of the bolt on the sloped surface of the first terminal body 1 and the second terminal body 2 of the bus bar element 10.

In a non-limiting manner, the opening 8 of the bus bar element 10 is configured to be fastened with the various electrical or electronic equipments or another bus bar element as stated in the further description below by means of the fastener 20 inserted through the opening 8. A mounting includes direct mounting either by bolting or by welding as a non limiting examples.

[Figure 2] illustrates a top view of an embodiment of a bus bar element 10 configured in accordance with the present subject matter.

In an embodiment, the bus bar element 10 is made of sheet material and defining a width along a second axis Y and a length along the first axis X. The first axis X and the second axis Y are perpendicular to each other.

In an embodiment as shown in [Figure 2], the main body 3 having two distal ends opposite to each other along the first axis X. The main body 3 having a first portion 11 and a second portion 12 at the distal ends of the main body 3. The first terminal body 1 and/or the second terminal body 2 has a curved shape with a cross sectional third width W3. The cross sectional third width W3 is measured between the axial end of the first terminal body 2 and the first portion 11 of the main body 3. The cross sectional third width W3 is also measured between the axial end of the second terminal body 3 and the second portion 12 of the main body 3. The said first portion 11 and second portion 12 integrally forms the main body 3 extending from the first terminal body 1 and/or the second terminal body 2. The first portion 11 and the second portion 12 converges along either side of the first axis X. The width of the boundary between first terminal body 1 or second terminal body 2 and the main body 3 is a second width W2. The main body 3 elongates along the second axis Y having a first width W1 in the second axis Y. The first width W1 of the main body 3 is greater than the cross sectional third width W3 of the first terminal body 1 and or second terminal body 2 at least along a plane normal to the first axis X.

In an exemplary embodiment as illustrated in [Figure 2] the first terminal body 1 and the second terminal body 2 has a circular axial ends with a first diameter D2. Further the first terminal body 1 and the second terminal body 2 has the opening 8. The opening 8 is a circular opening with a second diameter D1. The range of the diameter D1 is between 4mm and 12mm, preferably between 6mm and 10mm. The first diameter D2 is given by the expression D2=D1 + (2*T4). Preferably, the range of the first diameter D2 is between 6mm and 32mm. The second diameter D1 of the opening 8 is in compliment with the bolt diameter of the fastener 20. Preferably, the first diameter D2 is greater than the second width W2 but not greater than the first width W1.

The said first width W1 is greater than the second width W2 and the third width W3. The first width W1 of the main body 3 extending in the second axis Y is at least greater than the first diameter D2. Preferably, the range of the first width W1 is between 10mm and 34mm. Preferably, the range of the second width W2 is between 6mm and 16mm.

In an embodiment, the main body 3 has a non-uniform thickness with maximum thickness extending in the third axis Z and reduces towards the first portion 11 and / or second portion 12 of the main body 3 along the first axis X.

[Figure 3] illustrates a side view of a bus bar connector assembly 11 configured in accordance with an arrangement of the present subject matter. A bus bar connector assembly 11 comprising a first bus bar element 10 configured in accordance with the present subject matter as described above and a second bus bar element 10a configured in accordance with the present subject matter as described above. The first surface 5 of the first terminal body 1 of the first bus bar element 10 is abutting against a first surface 5a of a first terminal body 1a of the second bus bar element 10a for electrical coupling.

In a non - limiting example a central axis C of the opening 8 of the first terminal body 1 of the first bus bar element 10 substantially coincides with a central axis C1 of an opening 8 of the first terminal body 1a of the second bus bar element 10a.

The first bus bar element 10 and the second bus bar element 10a are coupled together by a fastener 20 for electrical coupling as illustrated in [Figure 3].

In an instance, the first terminal body 1 of the bus bar element 10 is configured to mechanically and electrically couple to a conducting element or an electrical or electronic equipments. For instance, the conducting element may be a second bus bar element 10a whose corresponding terminal body 1a is configured in accordance with the present subject matter as illustrated in [Figure 3]. Likewise, in a non-limiting manner more number of bus bar elements in accordance with the present subject matter is coupled in an above described examples.

[Figure 4], [Figure 5], [Figure 6], [Figure 7], [Figure 8], [Figure 9] and [Figure 10] illustrate top view of various embodiments of a bus bar element configured in accordance with the present subject matter; the description herein pertains to [Figure 4], [Figure 5], [Figure 6], [Figure 7], [Figure 8], [Figure 9] and [Figure 10] in tandem for the sake of brevity.

According to an aspect of the present subject matter, the main body 3 having a first portion 11 and a second portion 12 at the distal ends of the main body 3. The said first portion 11 and the second portion 12 integrally forms the main body 3. The first portion 11 and the second portion 12 converges along either side of the first axis X having a second width W2 at the distal ends of the main body 3 from where the first terminal body 1 and the second terminal body 2 extends from either side of the main body 3 along the first axis X. The main body 3 elongates along the second axis Y having a first width W1 in the second axis Y. The first width W1 of the main body 3 is greater than a cross sectional width of the first terminal body 1 and the second terminal body 2 at least along a plane normal to the first axis X.

The bus bar element 10 may be used for the distribution of electrical power and to electrically couple plurality of electrical or electronic equipments like inverter, electric power converters, battery module, on board chargers, etc. with each other and with other components in an automobile. The bus bar element 10 acts as a primary component for inter connecting various battery cells in a battery module in order to get a required power output from the battery module. In a non-limiting example, the abovementioned equipments may further be used in association with rotary electrical machines such as alternators, alternator-starters, or also reversible machines or electric motors. A reversible machine is a rotary electrical machine that can work reversibly, firstly as an electric generator in alternator function, and secondly as an electric motor, for instance, to start a thermal engine of a motor vehicle. Such rotary electrical machines may also be applied as a traction motor for hybrid or electric vehicles.

The present subject matter speaks of applying the bus bar element 10 in automotive applications, however, it can be understood that the application can extend to various other industries, such as aerospace, mining, electricity distribution, energy and power generation, etc.

Various modifications of the disclosed embodiments, as well as alternate embodiments of the subject matter, will become apparent to persons skilled in the art upon reference to the description of the subject matter. It is therefore contemplated that such modifications can be made without departing from the scope of the present subject matter is defined.

## Claims

1. Bus bar element (10) for an electrical connection comprising: a first terminal body (1) extending along a first axis (X) having a first surface (5) and a second surface (4) defining a thickness along a third axis (Z) configured to electrically couple with an electrical interface; a main body (3) extending from the first terminal body (1); the said first terminal body (1) having an opening (8) configured to receive a fastener (20); wherein a first thickness (T1) of the opening (8) of the first terminal body (1) extending in the first axis (X) towards the main body (3) is greater than a second thickness (T2) of at least part of the first terminal body (1) extending towards an axial end.

2. Bus bar element (10) according to claim 1, wherein a first boundary (8a) of the opening (8) in the first axis (X) towards the main body (3) has the first thickness (T1) in a third axis (Z) and a second boundary (8b) of the opening (8) in the first axis (X) towards the axial end has the second thickness (T2) along the third axis (Z)

3. Bus bar element (10) according to any one of the claims 1 to 2, wherein the first terminal body (1) is sloped downward away from the main body (3).

4. Bus bar element (10) according to any one of the claims 1 to 3, wherein the bus bar element (10) is made of sheet material defining a width along a second axis (Y) and a length along the first axis (X), the said first axis (X) and the second axis (Y) are perpendicular to each other.

5. Bus bar element (10) according to any one of the claims 1 to 4, wherein a first width (W1) of the main body (3) is greater than a cross sectional width of the first terminal body (1) at least along a plane normal to the first axis (X).

6. Bus bar element (10) according to any one of the claims 1 to 5, wherein the first terminal body (1) having a curved shape with a third width (W3).

7. Bus bar element (10) according to claim 6, wherein the first terminal body (1) having a circular axial end with a first diameter (D2).

8. Bus bar element (10) according to any one of the claim 1 to 7, wherein the opening (8) is a circular profile with a second diameter (D1).

9. Bus bar element (10) as claimed in claim 7 in combination with claim 4 and 5, wherein the first width (W1) of the main body (3) extending in the second axis (Y) is at least greater than the first diameter (D2).

10. Bus bar element (10) according to any one of the claims 1 to 9, wherein the first terminal body (1) having the opening (8) extending along the first axis (X) and to the axial end.

11. Bus bar element (10) in accordance with any one of the claim 1 to 10, wherein the bus bar element (10) comprises a second terminal body (2) extending from the main body (3).

12. Bus bar connector assembly (11) comprising a first bus bar element (10) in accordance with any one of the claim 1 to 11 and a second bus bar element (10a) in accordance with any one of the claim 1 to 11, wherein the first surface (5) of the first terminal body (1) of the first bus bar element (10) is configured to abut against a first surface (5a) of a first terminal body (1a) of the second bus bar element (10a) for electrical coupling.

13. Bus bar connector assembly (11) as claimed in claim 12, wherein a central axis (C) of the opening (8) of the first terminal body (1) of the first bus bar element (10) substantially coincides with a central axis (C1) of an opening (8i) of the first terminal body (1a) of the second bus bar element (10a) to receive the fastener (20) for electrical coupling.
